# FASCICULE DE BREVET EUROPEEN

(11) **EP 3 628 884 B1**
(45) Date de publication et mention de la délivrance du brevet: **14.07.2021**
(21) Numéro de dépôt: 19197885.7
(22) Date de dépôt: 17.09.2019
(51) Int. Cl.: F16D 13/58, F16D 13/68

(54) **SOUS-ENSEMBLE POUR MECANISME D'EMBRAYAGE ET MECANISME D'EMBRAYAGE COMPRENANT UN TEL SOUS-ENSEMBLE**
UNTEREINHEIT FÜR EINEN KUPPLUNGSMECHANISMUS UND EINE SOLCHE UNTEREINHEIT UMFASSENDER KUPPLUNGSMECHANISMUS
SUBASSEMBLY FOR CLUTCH MECHANISM AND CLUTCH MECHANISM COMPRISING SUCH A SUBASSEMBLY

(30) Priorité: 28.09.2018 FR 1858932
(43) Date de publication de la demande: 01.04.2020
(73) Titulaire: VALEO EMBRAYAGES, 80009 Amiens (FR)
(72) Inventeur: DUBOIS, Bernard, 95892 CERGY PONTOISE (FR); BOUCHE, Gabriel, 95892 CERGY PONTOISE (FR); CRESSET, Jérôme, 95892 CERGY PONTOISE (FR); REDIEN, Cyril, 95892 CERGY PONTOISE (FR)
(74) Mandataire: Vincent, Catherine Marie Marguerite

(56) Documents cités:
- FR-A1- 2 507 268
- FR-A1- 2 535 419
- GB-A- 2 186 039
- GB-A- 2 222 439

## Description

La présente invention se rapporte à un sous-ensemble pour mécanisme d'embrayage et un mécanisme d'embrayage comprenant un tel sous-ensemble.

Un tel mécanisme d'embrayage, utilisé notamment dans le domaine automobile, comprend typiquement un couvercle, un plateau de pression, un diaphragme monté, éventuellement précontraint, entre le couvercle et le plateau de pression, et des moyens d'articulation de ce diaphragme par rapport au couvercle.

Dans un tel mécanisme d'embrayage, en position embrayée, le diaphragme exerce sur le plateau de pression des efforts suffisants pour bloquer le disque d'embrayage et permettre ainsi la transmission du couple moteur à la boîte de vitesses. Il est connu des mécanismes d'embrayage de type Poussé et des mécanismes d'embrayage de type Tiré.

Dans le cas d'un mécanisme d'embrayage de type poussé, l'opération de débrayage est par exemple réalisée par appui d'une butée d'embrayage sur la partie centrale du diaphragme selon l'axe du diaphragme en direction du moteur. Ce diaphragme coopère alors avec les moyens d'articulation, ménagés entre le diaphragme et le couvercle, de manière que la partie radialement extérieure du diaphragme s'écarte du plateau de pression. Les moyens d'articulation forment un appui circonférentiel. Notamment, le diaphragme appuie sur une surface torique formée directement dans le couvercle par emboutissage. Les moyens d'articulation sont formés de la même matière que celle du couvercle, c'est-à-dire dans un acier apte à l'emboutissage et présentant un faible taux de carbone.

Dans ces conditions, le plateau de pression s'éloigne alors du disque d'embrayage sous l'effet de moyens de rappel élastiques, libérant ainsi la friction, ce qui permet de cesser de transmettre le couple du moteur à la boîte de vitesses et, le cas échéant, d'effectuer les changements de rapports de vitesses nécessaires.

Dans le cas d'un mécanisme d'embrayage de type tiré, l'opération de débrayage est par exemple réalisée par action d'une butée d'embrayage sur la partie centrale du diaphragme selon l'axe du diaphragme en direction de la boîte de vitesses. Ce diaphragme coopère alors avec des moyens d'articulation, ménagés entre le diaphragme et le couvercle. Les moyens d'articulation forment un appui circonférentiel. Notamment, le diaphragme appuie sur une surface torique formée directement dans le couvercle par emboutissage.

On a pu constater qu'à la suite d'un grand nombre de débrayages, l'articulation du diaphragme par rapport au couvercle avait tendance à s'user (on parle d'usure et/ou de « matage ») sous l'effet des mouvements répétés du diaphragme, et qu'il finissait ainsi par apparaître des jeux entre cette articulation et le diaphragme. L'usure se concentre notamment sur la surface torique, étant donné que l'acier utilisé est peu résistant à l'usure. Ces phénomènes de matage et/ou d'usure sont particulièrement observés dans les embrayages des véhicules du type véhicules industriels ou « poids lourds » où les efforts exercés par le diaphragme sur l'articulation peuvent actuellement atteindre 12 000 N.

L'apparition de tels jeux a pour effet de réduire la course de la périphérie du diaphragme lorsque celui-ci est poussé par la butée d'embrayage, et ainsi de réduire la course du plateau de pression lors du passage de la position embrayée à la position débrayée.

Il résulte de ceci qu'au bout d'un certain temps, il n'est plus possible de réaliser un débrayage complet, c'est-à-dire de supprimer tout contact entre le plateau de pression et les garnitures de la friction : une partie du couple du moteur continue ainsi d'être transmise à ce disque, ce qui rend difficile, voire impossible, les changements de rapport de la boîte de vitesses.

On connaît du document EP 2129927 un mécanisme d'embrayage de type poussé comprenant un couvercle, un plateau de pression, un diaphragme monté entre le couvercle et le plateau de pression, des moyens d'articulation du diaphragme par rapport au couvercle, et un organe annulaire élastique précontraint, monté opposé aux moyens d'articulation par rapport au diaphragme de manière à maintenir le diaphragme plaqué contre les moyens d'articulation. Les moyens d'articulation se présentent sous la forme d'un jonc annulaire rapporté sur le couvercle. Il est maintenu en place au sein du mécanisme d'embrayage à l'aide d'entretoises.
Le jonc annulaire peut être réalisé dans un matériau plus résistant à l'usure que celui utilisé pour les couvercles. Les phénomènes d'usure sont ainsi améliorés.

Cependant, bien que ce mécanisme d'embrayage permette de réduire une partie de l'usure, il présente des difficultés d'assemblage en raison de l'emploi d'un jonc séparé du couvercle. Lors de l'assemblage du mécanisme d'embrayage, les opérateurs manipulent un sous-ensemble formé du couvercle et du jonc annulaire avant la mise en place du diaphragme. A cette étape de l'assemblage, le jonc annulaire est encore libre. Il est difficile de garantir un positionnement sûr du jonc par rapport au couvercle. Cela impose un contrôle supplémentaire de l'opérateur pour s'assurer que le jonc est dans la bonne position. Après assemblage, le jonc annulaire est maintenu par le diaphragme et les entretoises.

FR2535419A1 décrit un mécanisme d'embrayage selon l'état de la technique.

Un but de l'invention est donc de proposer un mécanisme d'embrayage permettant de réduire l'usure de l'articulation du diaphragme de manière à permettre de réaliser un débrayage complet de l'embrayage tout en garantissant un bon positionnement du jonc annulaire lors de l'assemblage par rapport aux embrayages connus de l'état de la technique.

L'invention a notamment pour but d'apporter une solution simple, efficace et économique à ce problème.

Le but de la présente invention est notamment de proposer un sous-ensemble et un mécanisme d'embrayage permettant de résoudre au moins une partie de certains inconvénients de l'art antérieur.

Selon un premier aspect de l'invention, on atteint au moins l'un des objectifs précités au moyen d'un sous-ensemble pour mécanisme d'embrayage, comprenant :
- un couvercle pourvu d'un logement circulaire d'axe de révolution,
- un anneau élastique ouvert inséré dans le logement circulaire,
l'anneau élastique ouvert étant défini par deux états de fonctionnement : un état libre, dans lequel le diamètre extérieur de l'anneau est supérieur au diamètre du logement, et un état contraint, dans lequel le diamètre extérieur de l'anneau est inscrit dans le diamètre du logement,
dans lequel le logement et l'anneau élastique comprennent chacun des moyens de retenue additionnels adaptés pour maintenir l'anneau élastique dans son état contraint au sein du couvercle.

Les moyens de retenue additionnels, selon l'invention, présente l'avantage de simplifier l'assemblage de l'anneau élastique au sein du couvercle. L'élasticité de l'anneau est créée par l'ouverture formée sur sa périphérie et par un diamètre extérieur supérieur au diamètre du logement du couvercle, cela présente l'avantage permet de créer un effort radial de plaquage de l'anneau élastique dans le logement du couvercle.

L'anneau élastique peut présenter une matière différente de celle utilisée pour le couvercle. Par exemple, un acier à haute limite élastique et résistant à l'usure peut être sélectionné pour réduire les phénomènes d'usure.

La forme du logement du couvercle coopère avec la forme de l'anneau élastique pour maintenir l'anneau élastique dans son état contraint de façon à garantir un positionnement sûr de l'anneau par rapport au couvercle.

Le logement du couvercle comprend un fond sur lequel l'anneau élastique est en appui, et des moyens de retenue additionnels comprenant :
- un bord radial délimité par un diamètre dB, et
- un congé de raccordement reliant le fond avec le bord radial.
Cette forme de logement du couvercle présente l'avantage d'être simple à réaliser, notamment par des procédés d'enlèvement de matière de type usinage.

Avantageusement, le diamètre du logement peut être formé par le congé de raccordement, le diamètre du logement étant supérieur au diamètre dB.

Avantageusement, les formes géométriques des moyens de retenue additionnels du logement et de l'anneau élastique peuvent coopérer pour maintenir l'anneau élastique dans son état contraint au sein du couvercle. Cette coopération de formes géométriques assure un emboitement fiable des deux pièces qui se recouvrent l'une l'autre après assemblage du sous-ensemble.

L'invention peut présenter l'une ou l'autre des caractéristiques décrites ci-dessous combinées entre elles ou prises indépendamment les unes des autres :
- Le congé de raccordement peut être un arc de cercle qui relie le fond du logement avec le bord radial pour former un angle a, l'angle α étant compris entre 45 degrés et 89 degrés.
- Le diamètre extérieur de l'anneau élastique dans son état contraint peut être supérieur au diamètre dB du bord radial.
- Le logement du couvercle peut être réalisé par usinage.
- L'anneau élastique peut présenter en section selon un plan passant par l'axe de révolution une forme trapézoïdale, les moyens de retenue additionnels dudit anneau élastique étant réalisés par une des faces du trapèze. Les moyens de retenue additionnels sont directement intégrés à la forme de l'anneau élastique, ainsi le cout global du sous-ensemble n'est pas affecté. La forme trapézoïdale présente également l'avantage de faciliter la mise en place de l'anneau par rapport au couvercle lors du montage.
- L'anneau élastique peut présenter en section selon un plan passant par l'axe de révolution une forme de trapèze rectangle.
- La section de l'anneau élastique peut comprendre un nombre pair d'arrêtés associées aux faces du trapèze.
- La section de l'anneau élastique peut comprendre quatre faces, une première face est en appui sur le fond du couvercle et une deuxième face est en appui sur le bord radial du couvercle, ladite deuxième face étant tronconique. La deuxième face tronconique présente l'avantage de bloquer axialement l'anneau élastique par au logement lorsque celui-ci est dans son état contraint. Après assemblage, l'opérateur peut manipuler le sous-ensemble sans risquer de faire sortir l'anneau élastique de son logement.
- Une troisième face de la section de l'anneau élastique peut être en appui sur le diaphragme, ladite troisième face étant bombée. La troisième face bombée présente l'avantage de réduire la pression de Hertz au niveau du contact avec le diaphragme et de réduire les phénomènes d'usure.
- Selon une variante, le bord radial du logement peut présenter une contre-dépouille adaptée à coopérer avec l'anneau élastique, l'avantage étant de retenir l'anneau lors de la manipulation du sous-ensemble.
- La contre-dépouille peut présenter un angle α compris entre 45 degrés et 89 degrés mesuré entre le fond du logement et le bord radial, préférentiellement entre 45 degrés et 75 degrés.
- Préférentiellement, le bord radial du logement peut présenter une contre-dépouille adaptée à coopérer avec la deuxième face inclinée de l'anneau élastique. La contre-dépouille présente l'avantage d'éviter un montage inversé de l'anneau élastique par rapport à son logement. En cas de montage inversé, la deuxième face inclinée glisse sur le bord radial et fait sortir l'anneau élastique du logement.
- Selon une autre variante, le bord radial du logement du couvercle peut être cylindrique.
- Selon une autre variante, le bord radial du logement du couvercle peut être de forme tronconique.
- Selon encore une autre variante, l'anneau élastique peut présenter en section selon un plan passant par l'axe de révolution une forme elliptique, par exemple une forme circulaire, les moyens de retenue additionnels dudit anneau élastique étant réalisés par un des rayons de ladite forme.

L'invention a également pour objet, selon un autre de ses aspects, un mécanisme d'embrayage comprenant le sous-ensemble reprenant tout ou partie des caractéristiques mentionnées précédemment, un plateau de pression mobile axialement par rapport au couvercle, un diaphragme monté entre le couvercle et le plateau de pression, ledit diaphragme étant en appui sur l'anneau élastique.

Ce mécanisme d'embrayage, selon cet autre aspect de l'invention, comprend des moyens de retenue additionnels qui garantissent le bon positionnement de l'anneau élastique par rapport au diaphragme. La fiabilité du mécanisme d'embrayage est ainsi améliorée.

Cet autre aspect de l'invention peut présenter l'une ou l'autre des caractéristiques décrites ci-dessous combinées entre elles ou prises indépendamment les unes des autres :
- Le mécanisme d'embrayage peut comprendre un premier organe annulaire rigide disposé entre le diaphragme et le plateau de pression et fixé au couvercle au moyen d'entretoises, un second organe annulaire élastique précontraint, monté en appui sur le premier organe annulaire rigide, opposé à l'anneau élastique par rapport au diaphragme, les organes annulaires rigide et élastique étant disposés de manière coaxiale, les entretoises étant implantées par rapport à l'organe annulaire rigide sensiblement selon un cercle d'implantation.
- Les entretoises peuvent être fixées au couvercle et peuvent traverser le diaphragme, l'anneau élastique étant logé à l'extérieur des entretoises.
- La zone d'appui du second organe annulaire élastique sur le premier organe annulaire rigide peut s'étendre sensiblement selon le cercle d'implantation des entretoises.
- Une quatrième face de la section de l'anneau élastique peut être en appui sur des entretoises emmanchées dans des orifices aménagées dans le couvercle.
- Le mécanisme d'embrayage peut être de type Poussé.
- L'anneau élastique peut comporter sur l'une de ces extrémités un brin recourbé selon l'axe, ledit brin passant au travers d'un orifice ménagé dans le couvercle.
- La position angulaire de l'orifice ménagé dans le couvercle peut être située à égale distance de deux entretoises consécutives.
- Le brin recourbé peut être en saillie axiale par rapport à la surface externe du couvercle.
- Le brin recourbé peut être réalisé par emboutissage, par pliage.

Le brin recourbé de l'anneau élastique présente l'avantage d'empêcher la rotation de l'anneau élastique par rapport au couvercle sous l'effet des vibrations engendrées par le moteur thermique. De plus, le brin recourbé de l'anneau élastique informe l'opérateur de montage du bon positionnement de l'anneau au sein du logement du couvercle, ce qui évite un contrôle supplémentaire par l'opérateur.
- Le mécanisme d'embrayage peut être de type Tiré, le couvercle comprenant une plaque annulaire, une jupe externe et une zone de raccordement reliant la plaque annulaire à la jupe externe, le logement du couvercle étant formé au niveau de la zone de raccordement.

L'invention a également pour objet, selon un autre de ses aspects, un procédé de fabrication de l'anneau élastique pour mécanisme d'embrayage, comportant au moins les étapes suivantes :
- Fournir un anneau élastique de type ouvert, l'ouverture étant délimitée entre ses deux extrémités ;
- Former une entaille ou une encoche depuis une première extrémité de l'anneau élastique, à une distance minimale D1 de ladite première extrémité.
- Plier ladite première extrémité de l'anneau élastique jusqu'à l'entaille ou l'encoche, pour former le brin recourbé.

Selon ce procédé, l'entaille ou l'encoche formée avant pliage permet d'obtenir un brin droit par rapport au reste de l'anneau, sans protubérance, courbure ou rayonnage résiduelle après pliage, ce qui limite la déformation de l'anneau élastique notamment sollicité par le couvercle lors du fonctionnement du mécanisme d'embrayage. Préférentiellement l'entaille ou l'encoche définit une forme en V.

L'entaille ou l'encoche étant formée à une distance minimale de l'extrémité de l'anneau élastique, ladite distance minimale peut définir la hauteur minimale du brin recourbé, adaptable suivant l'épaisseur du couvercle ou la profondeur de l'orifice ménagé dans le couvercle. Plus précisément, l'entaille ou l'encoche est formée depuis la première face de l'anneau élastique.

L'invention a également pour objet, selon un autre de ses aspects, un procédé d'assemblage d'un sous-ensemble pour mécanisme d'embrayage tel que défini précédemment, comportant au moins les étapes suivantes :
- fournir un couvercle et un anneau élastique dans son l'état libre,
- contraindre diamétralement l'anneau élastique de sorte que le diamètre extérieur de l'anneau soit inférieur au diamètre dB du logement du couvercle,
- appliquer l'anneau élastique au fond du logement,
- relâcher la contrainte diamétrale sur l'anneau élastique de sorte que l'anneau élastique vienne en appui sur le bord radial du logement du couvercle, l'anneau étant alors dans son état contraint.
Selon ce procédé, l'assemblage mécanique du sous-ensemble est réalisé en une simple opération sans soudure ou appareillage complexe, dans laquelle l'opérateur exerce une force radiale sur le diamètre l'anneau élastique puis la relâche.

D'autres caractéristiques et avantages de l'invention apparaîtront à l'examen de la description des modes de réalisation qui vont suivre, présentés uniquement à titre d'exemple illustratif et non limitatif, en référence aux figures ci-annexées sur lesquelles :
- la figure 1 est une vue en coupe partielle d'un mécanisme d'embrayage de type Poussé comprenant un sous-ensemble selon un premier mode de réalisation;
- la figure 2 est une vue éclatée en perspective du mécanisme d'embrayage selon le premier mode de réalisation de la figure 1 ;
- la figures 3A est une vue de détail du mécanisme d'embrayage selon le premier mode de réalisation de la figure 1 ;
- la figures 3B est une vue de détail du mécanisme d'embrayage selon un deuxième mode de réalisation proche de celui présenté sur la figure 1 ;
- la figures 3C est une vue de détail du mécanisme d'embrayage selon un troisième mode de réalisation proche de celui présenté sur la figure 1 ;
- la figure 4 est une vue en coupe partielle d'un mécanisme d'embrayage de type Tiré comprenant un sous-ensemble selon un quatrième mode de réalisation ;
- la figure 5 est une vue en perspective d'un anneau élastique selon le premier mode de réalisation de la figure 1
- la figure 6 est une vue en perspective d'un anneau élastique selon un cinquième mode de réalisation ;
- la figure 7 est une vue de détail d'un mécanisme d'embrayage comprenant l'anneau élastique selon le cinquième mode de réalisation présenté sur la figure 6 ;
- les figures 8a et 8b décrivent un procédé de fabrication de l'anneau élastique selon un autre mode de réalisation de l'invention.

Dans la suite de la description, les éléments identiques ou de fonction identique sont repérés, sauf mention contraire, par la même référence numérique.

On utilisera à titre non limitatif et afin d'en faciliter la compréhension, les termes « intérieur / interne » ou « extérieur / externe » par rapport à l'axe O de révolution pour la rotation de la transmission du véhicule automobile et suivant une orientation radiale, orthogonale à ladite orientation axiale.

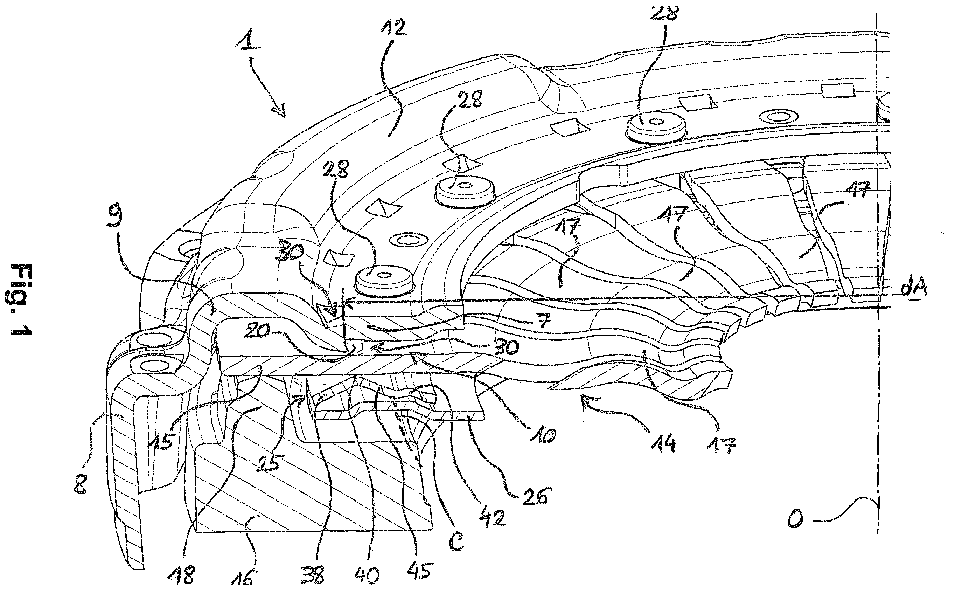

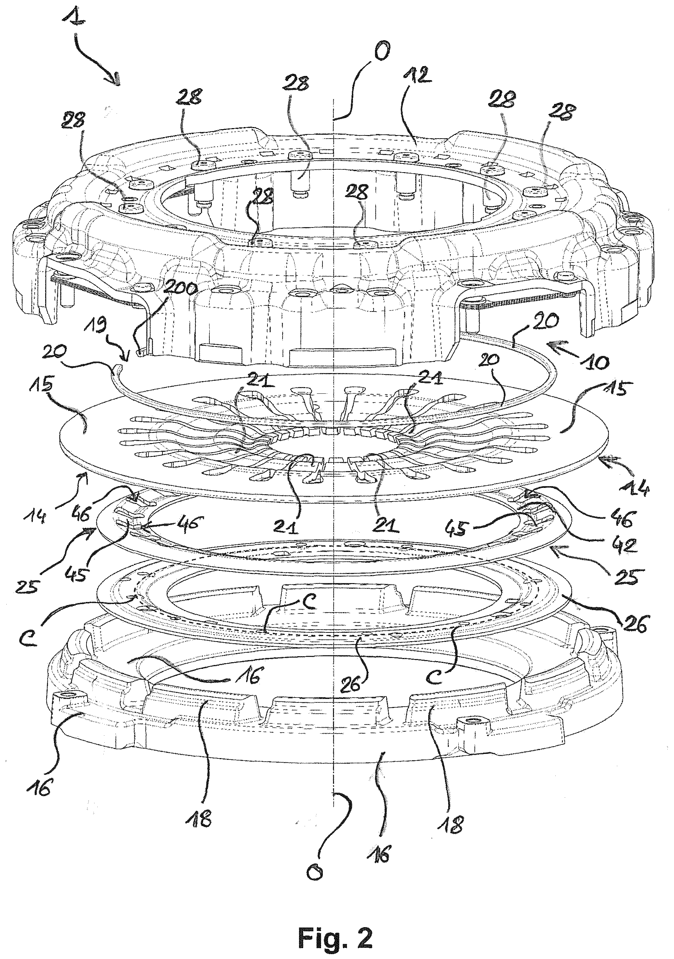

Les figures 1 et 2 présentent un sous-ensemble 10 pour mécanisme d'embrayage 1 de type poussé conforme au premier mode de réalisation de l'invention.

Le sous-ensemble 10 selon le premier mode de réalisation comporte un couvercle 12 et un anneau élastique 20 ouvert. Le couvercle 12 est pourvu d'un logement 13 circulaire d'axe O de révolution, dans lequel l'anneau élastique 20 ouvert est inséré. Le logement 13 du couvercle 12 et l'anneau élastique 20 comprennent chacun des moyens de retenue additionnels 30. Les moyens de retenue additionnels 30 du logement 13 et de l'anneau élastique 20 sont adaptés pour maintenir l'anneau 20 dans un état contraint au sein du couvercle 12. Le logement 13 du couvercle 12 est réalisé par usinage.

Les moyens de retenue additionnels 30 sont décrit de manière détaillé dans la suite de la description.

Le couvercle 12 est relié par des moyens de fixation appropriés à un volant d'inertie (non représenté) lui-même monté sur l'arbre de sortie d'un moteur par exemple du type à combustion interne (non représenté).

Le mécanisme d'embrayage 1 comprend également un diaphragme 14, un plateau de pression 16 (voir figures 1 et 2). Le plateau de pression 16 est adapté pour venir en appui sur un disque d'embrayage (non représenté).

De manière optionnelle, un dispositif 18 de compensation d'usure des garnitures du disque d'embrayage est disposé entre le diaphragme 14 et le plateau de pression 16. Le plateau de pression (16) est mobile axialement par rapport au couvercle (12).

Comme illustré en partie sur la figure 1, le diaphragme 14 est monté entre le couvercle 12 et le plateau de pression 16. Ce diaphragme 14 comporte d'une part une partie périphérique 15 et d'autre part des doigts 17 qui s'étendent radialement vers l'intérieur du diaphragme 14 à partir de la partie périphérique 15.

Sur la figure 1, le diaphragme 14 est monté de manière à pouvoir basculer par rapport au couvercle 12 autour de l'anneau élastique 20, réalisés ici sous forme d'un jonc d'articulation monté entre le couvercle 12 et le diaphragme 14.

Le logement 13 du couvercle comprend un fond 33, un bord radial 31 et un congé de raccordement 32. Le logement est une forme de révolution obtenue par exemple par usinage. Le congé de raccordement 32 relie le fond 33 avec le bord radial 31. Les moyens de retenue additionnels 30 du couvercle 12 sont formés par le bord radial 31 et le congé de raccordement 32.

Le congé de raccordement est par exemple un arc de cercle qui relie le fond 33 avec le bord radial 31 pour former un angle a. L'angle α est compris entre 45 degrés et 89 degrés.

Le bord radial 31 est incliné par rapport à l'anneau élastique 20. Préférentiellement, le bord 31 est incliné en direction de l'anneau élastique 20.

Préférentiellement, le bord radial 31 du logement présente avec le fond 33 du logement un angle α compris entre 45 degrés et 89 degrés.

Sur la figure 1, le bord radial 31 du logement présente avec le fond 33 du logement un angle α égale à 55 degrés environ.

Dans le premier mode de réalisation, l'anneau élastique 20 présente en section selon un plan passant par l'axe O de révolution une forme trapézoïdale 200. Plus précisément, l'anneau élastique présente en section selon un plan passant par l'axe O de révolution une forme 200 de trapèze rectangle.

La section de l'anneau élastique 20 comprend quatre faces 21, 22, 23 et 24. Egalement, la section de l'anneau élastique 20 comprend un nombre pair d'arrêtés associées aux faces du trapèze.

Dans le premier mode de réalisation, les moyens de retenue additionnels 30 dudit anneau élastique 20 sont réalisés par une des faces du trapèze.

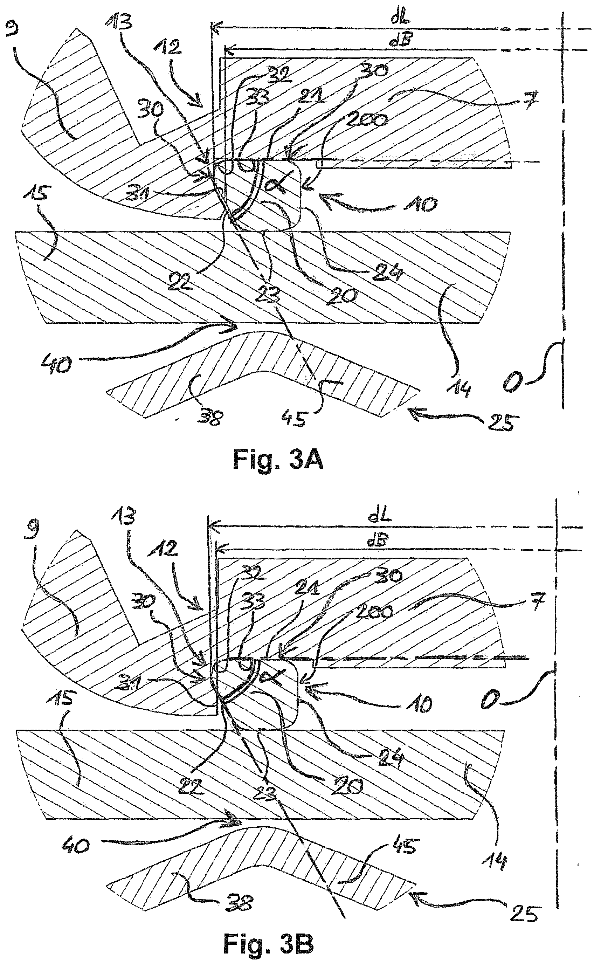

Comme cela est illustré sur la figure 3A, l'anneau élastique 20 est en appui sur le fond 33 du logement par l'intermédiaire d'une première face 21. De préférence, le fond 33 est localisé au niveau d'une plaque annulaire 7 du couvercle 12. Par exemple, la première face 21 est appui sur le fond 33 peut être la plus grande face de la section de l'anneau élastique 20. Cela présente l'avantage de positionner l'anneau élastique de manière stable au fond du logement.

Par ailleurs, une deuxième face 22 de la section de l'anneau élastique 20 est en appui sur un bord radial 31 du couvercle 12. Dans le premier mode de réalisation, cette deuxième face 22 est de forme tronconique.

Sur la figure 3A, le bord radial 31 du logement 13 présente une contre-dépouille. Cette contre-dépouille représente ainsi un type spécial de surface encastrée du bord radial 31.

Cette contre-dépouille du bord radial 31 est adaptée à coopérer avec l'anneau élastique 20.

Cette contre-dépouille est adaptée à coopérer avec la deuxième face 22 inclinée de l'anneau élastique 20 ouvert. De préférence, le bord radial 31 est incliné par rapport à la deuxième face 22 de l'anneau élastique 20. Avantageusement, l'extrémité 270 du bord radial 31 en regard avec le diaphragme 14 comprend une bordure tronquée, la pointe ayant été supprimé, afin de ne pas couper ou écorcher les doigts de l'opérateur.

L'anneau élastique 20 présente un diamètre extérieur dA. Le diamètre extérieur dA de l'anneau élastique 20 dans son état contraint est supérieur au diamètre dB du bord radial 31 du couvercle 12. La périphérie interne du logement 13 du couvercle 12 définit un diamètre dL selon l'axe O de révolution. Plus précisément, le diamètre dL du logement 13 est formé par le congé 32 de raccordement. De préférence, le diamètre dL du logement 13 est supérieur au diamètre dB du bord radial 31.

Dans le cas où l'anneau élastique 20 ouvert est dans un état libre, le diamètre extérieur dA de l'anneau élastique 20 est supérieur au diamètre dL du logement 13.

Dans le cas où l'anneau élastique 20 ouvert est dans un état contraint, le diamètre extérieur dA de l'anneau élastique 20 est inscrit dans le diamètre dL du logement 13. Lors du montage du sous-ensemble, le diamètre extérieur dA de l'anneau élastique 20 peut être inférieur au diamètre dL du logement 13.

Une troisième face 23 de la section de l'anneau élastique 20 est en appui sur le diaphragme 14. Dans le premier mode de réalisation, la troisième face 23 est bombée.

Le mécanisme d'embrayage 1 tel que représenté sur la figure 1 comporte un premier organe annulaire rigide 26 sur lequel un second organe annulaire élastique 25 ouvert est monté précontraint. Ce second organe annulaire élastique est réalisé idéalement, comme cela est représenté sur les figures, sous la forme d'une rondelle élastique 25, de préférence en acier en chrome-vanadium (par exemple en 50CV4).

De manière remarquable, le premier organe annulaire rigide 26 est disposé de manière coaxiale avec le second organe annulaire élastique 25 et est solidaire d'entretoises 28 fixées au couvercle 12 et traversant le diaphragme 14. Tel que représenté sur les figures 1 et 2, ce premier organe annulaire rigide est réalisé sous la forme d'une rondelle rigide 26.

Dans le premier mode de réalisation, la quatrième face 24 de la section de l'anneau élastique 20 est en appui sur des entretoises 28 emmanchées dans des orifices aménagées dans le couvercle 12 (non visible sur la figure 1).

Les entretoises 28 sont implantées par rapport à la rondelle rigide 26 selon un cercle d'implantation c (représenté partiellement à la figure 1, en traits discontinus) qui s'étend donc sensiblement dans le plan de cette rondelle rigide 26.

De manière remarquable, la mise en place de la rondelle élastique 25 par rapport à la rondelle rigide 26 est facilitée pendant la phase de montage. La zone d'appui de la rondelle élastique 25 sur la rondelle rigide 26 s'étend sensiblement selon le cercle d'implantation c des entretoises 28 par rapport à la rondelle rigide 26.

La rondelle élastique 25 comporte une première partie 38 formant rondelle Belleville en contact avec le diaphragme 14, qui, idéalement, est coudée au niveau de la zone 40 de contact avec le diaphragme 14. Cette première partie 38 formant rondelle Belleville, annulaire, et la rondelle élastique 25 sont coaxiales. Dans un plan axial de la rondelle élastique 25, le rayon de courbure de la première partie 38 de la rondelle élastique 25 est idéalement grand de manière à accroître la zone 40 de contact de la rondelle élastique 25 avec le diaphragme 14 pour éviter une usure importante et rapide de la rondelle élastique 25. De préférence, ce rayon de courbure est au moins égal à 5 mm.

Par ailleurs, comme représenté sur la figure 1, la rondelle élastique 25 comporte une deuxième partie 42 formant rondelle Belleville qui est en contact avec le moyen formant support 26. Cette deuxième partie 42 formant rondelle Belleville, annulaire, et la rondelle élastique 25 sont coaxiales. Idéalement, cette deuxième partie 42 de la rondelle élastique 25 est coudée au niveau de la zone de contact 44 avec la rondelle rigide 26, le rayon de courbure de cette deuxième partie 42 de la rondelle élastique 25 étant grand - de préférence au moins égal à 5 mm - de manière que la zone de contact 44 de la rondelle élastique 25 avec la rondelle rigide 26 soit relativement étendue et éviter de ce fait une usure importante et rapide de la rondelle élastique 25.

La rondelle élastique 25 présente en outre des bras de liaison 45 qui relient les première et deuxième parties 38, 42 de la rondelle élastique 25 qui forment rondelle Belleville. Dans ces bras de liaison 45, des évidements 46 de passage pour les entretoises 28 sont ménagés qui, idéalement, sont disposés entre les première et deuxième parties 38, 42 de la rondelle élastique 25 formant rondelle Belleville. Ces évidements 46 permettent ainsi un montage compact de l'embrayage 1 selon l'invention. Les évidements 46 permettent en outre un centrage de la rondelle élastique 25 dans des zones de faible contrainte.

De manière préférée, les évidements 46 sont oblongs et présentent un jeu fonctionnel par rapport aux entretoises 28 de manière qu'une entretoise 28 ne peut pas venir en appui sur le bord interne des évidements 46. En outre, ces évidements 46 sont plus grands pour ne pas générer de concentration de contraintes sur le diaphragme.

Enfin, la rondelle élastique 25 peut, comme cela est représenté sur les figures ci-annexées, être prolongée de part et d'autre des première et deuxième parties 38, 42 formant rondelle Belleville de manière à rendre la rondelle élastique 25 plus rigide et plus solide. De manière préférée, la rondelle élastique 25 présente une courbe de charge du type rondelle de Belleville.

Le fonctionnement du mécanisme d'embrayage 1 selon l'invention, notamment durant les phases de débrayage et d'embrayage, est semblable au fonctionnement d'un mécanisme d'embrayage poussé classique à ceci près qu'ici, la rondelle élastique 25 se déforme de manière élastique au cours de ces différentes phases de manière que la rondelle élastique 25 soit toujours en contact à la fois avec le diaphragme 14 et avec la rondelle rigide 26. Ainsi, avantageusement, on assure en fonctionnement le contact permanent de l'anneau élastique 20 ouvert avec le diaphragme 14 et le couvercle 12 du mécanisme d'embrayage 1.

De plus, le montage de la rondelle élastique 25 sur la rondelle rigide 26, montée coaxialement à la rondelle élastique 25, permet d'obtenir une zone de contact importante entre ces rondelles élastique 25 et rigide 26. Ainsi, les efforts entre les organes annulaires élastique et rigide sont répartis sur une plus grande surface également, ce qui permet d'obtenir une meilleure rigidité du dispositif de telle sorte que le mécanisme d'embrayage 1 selon l'invention est adapté à des efforts très importants - typiquement de l'ordre de grandeur susmentionné - exercés par le diaphragme 14 sur l'articulation de part et d'autre de l'anneau élastique 20 ouvert, réduisant ainsi l'usure de la rondelle élastique contre le diaphragme et l'usure de la rondelle élastique contre la rondelle rigide.

Par ailleurs, du fait que la zone d'appui de la rondelle élastique 25 sur la rondelle rigide 26 s'étend sensiblement selon le cercle d'implantation c des entretoises 28 par rapport à la rondelle rigide 26, l'embrayage selon l'invention est moins soumis à des efforts de flexions, notamment au niveau de la rondelle rigide 26, qui pourraient engendrer une usure ou tout autre détérioration de cette rondelle rigide 26. De fait, le travail des bouterolles d'entretoise est optimisé car l'effort de la rondelle élastique 25 sur la rondelle rigide 26 s'applique sur le cercle d'implantation des entretoises 28 par rapport à la rondelle rigide 26. Par suite, il est possible de soumettre l'embrayage selon l'invention à des efforts plus importants et/ou de réduire le nombre des entretoises 28.

Après un grand nombre d'embrayages et de débrayages qui ont provoqué l'usure de l'anneau élastique 20 ouvert et des zones de contact 40, 44 de la rondelle élastique 25 avec le diaphragme 14 et la rondelle rigide 26, respectivement.

Avec un embrayage classique, l'usure de l'anneau élastique 20 ouvert et des zones de contact 40, 44 se traduit par l'apparition de jeux entre l'anneau élastique 20 ouvert, d'une part, et le couvercle 12 et/ou le diaphragme 14, d'autre part, et ainsi qu'entre la rondelle élastique 25, d'une part, et le diaphragme 14 et/ou la rondelle rigide 26, d'autre part. Ici, ce jeu est récupéré par la déformation élastique de la rondelle élastique 25 montée précontrainte entre le diaphragme 14 et la rondelle rigide 26. Notamment, la première partie 38 de la rondelle élastique 25 formant rondelle Belleville et/ou la deuxième partie 42 formant rondelle Belleville permettent, par leur déformation élastique, de rattraper le jeu créé par l'usure de l'anneau élastique 20 ouvert et des zones de contact 40, 44. Plus précisément, le jeu est rattrapé par la déformation de la partie de la rondelle élastique 25 disposée radialement entre la zone 40 de contact de la rondelle élastique 25 avec le diaphragme 14 et la zone de contact 44 de la rondelle élastique 25 avec la rondelle rigide 26. Ainsi, même si l'anneau élastique 20 ouvert et les zones de contact 40, 44 s'usent de telle sorte que la distance entre ces zones de contact 40, 44 selon la direction axiale de l'embrayage 1 augmente, la rondelle élastique 25 permet de compenser cette usure. Le mode de fonctionnement et des avantages du mécanisme d'embrayage selon l'invention résultent directement de la description qui précède.

On va maintenant décrire l'assemblage du sous-ensemble 10 pour mécanisme d'embrayage 1 suivant le premier mode de mise en oeuvre de l'invention, tel qu'illustré notamment à la figure 2. L'assemblage comporte, entre autre, les étapes suivantes :
Selon une première étape, l'opérateur fournit un couvercle 12 et un anneau élastique 20 dans son l'état libre.

Selon une deuxième étape, l'anneau élastique 20 ouvert est contraint diamétralement. Pour réaliser cette contrainte diamétrale, on applique sur l'anneau élastique 20 une force de contrainte, ou pression d'appui radiale selon l'axe O de révolution. La pression radiale peut être appliqué par un opérateur ou par une machine.

Plus précisément, cette pression d'appui radiale permet de réduire le diamètre extérieur dA de l'anneau élastique 20 ouvert. Le diamètre extérieur dA de l'anneau élastique 20 sous contrainte diamétrale est alors inférieur au diamètre dB du logement 13 du couvercle 12.

Selon une troisième étape, on applique l'anneau élastique 20 au fond du logement 13. L'anneau élastique 20 est toujours contraint diamétralement durant cette étape.

Selon une quatrième étape, on relâche la contrainte diamétrale sur l'anneau élastique 20. Dès lors, l'anneau élastique 20 vient en appui sur le bord radial 31 du logement 13 du couvercle 12. L'anneau 20 est alors dans son état contraint, grâce à son appui sur le bord radial 31 du logement 13 du couvercle 12. L'anneau élastique 20 exerce une charge radiale sur le bord radial 31 du logement.

On a décrit sur la figure 3B, un deuxième mode de réalisation de l'invention sensiblement similaire au premier mode de réalisation à l'exception du fait que le bord radial 31 du logement 13 du couvercle 12 est cylindrique. Avantageusement, l'extrémité cylindrique du bord radial 31 présente une surface non inclinée, par exemple un angle droit. Le bord radial 31 délimite un diamètre dB selon l'axe O de révolution. Dans ce mode de réalisation, le diamètre extérieur dA de l'anneau élastique 20 dans son état contraint est supérieur au diamètre dB du bord radial 31 du couvercle 12.

La périphérie interne du logement 13 du couvercle 12 définit un diamètre dL selon l'axe O de révolution. Plus précisément, le diamètre dL du logement 13 est formé par le congé 32 de raccordement. De préférence, le diamètre dL du logement 13 est supérieur au diamètre dB du bord radial 31.

Comme illustré sur la figure 3B, une partie du bord radial du logement du couvercle est de forme tronconique.

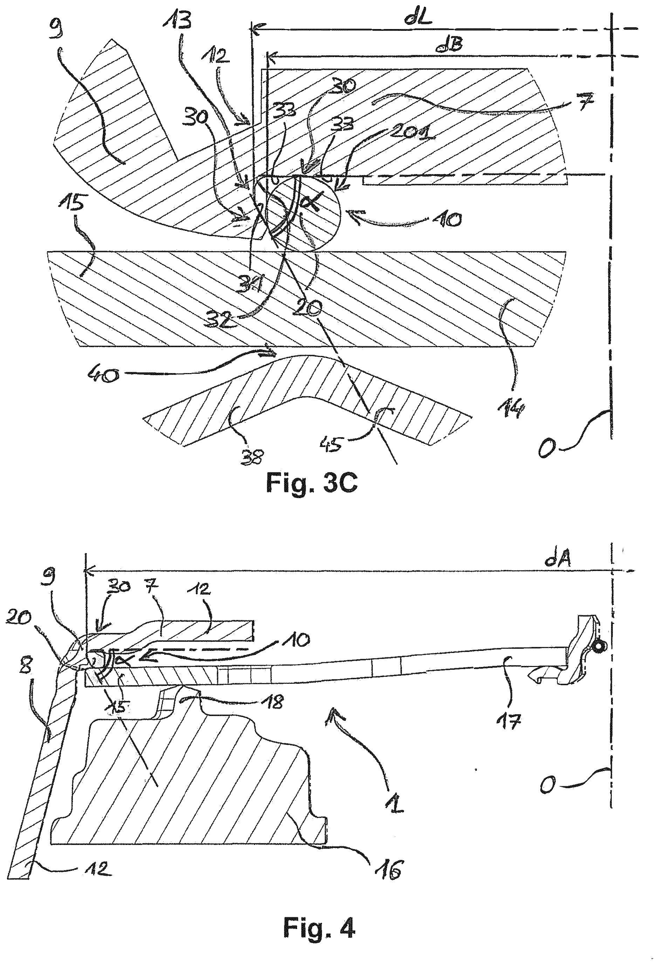

On a décrit sur la figure 3C, un troisième mode de réalisation de l'invention sensiblement similaire au premier mode de réalisation à l'exception du fait que l'anneau élastique 20 ouvert présente en section selon un plan passant par l'axe de révolution une forme circulaire 201. En variante non représentée, la forme peut être une forme elliptique ou ovale.

Les moyens de retenue additionnels 30 dudit anneau élastique 20 sont dans ce troisième mode réalisés par le rayon de la forme circulaire. Avantageusement, le rayon de la forme circulaire 201 vient s'inscrire dans le logement 13 du couvercle 12.

La figure 4 illustre un quatrième mode de réalisation de l'invention dans lequel le mécanisme d'embrayage 1 est de type « Tiré ». Le mécanisme d'embrayage 1 de type « Tiré » comprend : un couvercle 12 et un anneau élastique 20 qui constituent le sous-ensemble 10 selon l'invention. Le couvercle 12 comprend une plaque annulaire 7, une jupe externe 8 et une zone de raccordement 9. Cette zone de raccordement 9 relie la plaque annulaire 7 à la jupe externe 8.

Dans ce quatrième mode de réalisation, le logement 13 du couvercle 12 est formé au niveau de la zone de raccordement 9. La forme du logement 13 et la forme de l'anneau élastique 20 sont comparables au premier mode de réalisation. Le mécanisme d'embrayage 1 de type « Tiré » comprend également un diaphragme 14, un plateau de pression 16. Le plateau de pression 16 est adapté pour venir en appui sur un disque d'embrayage (non représenté).

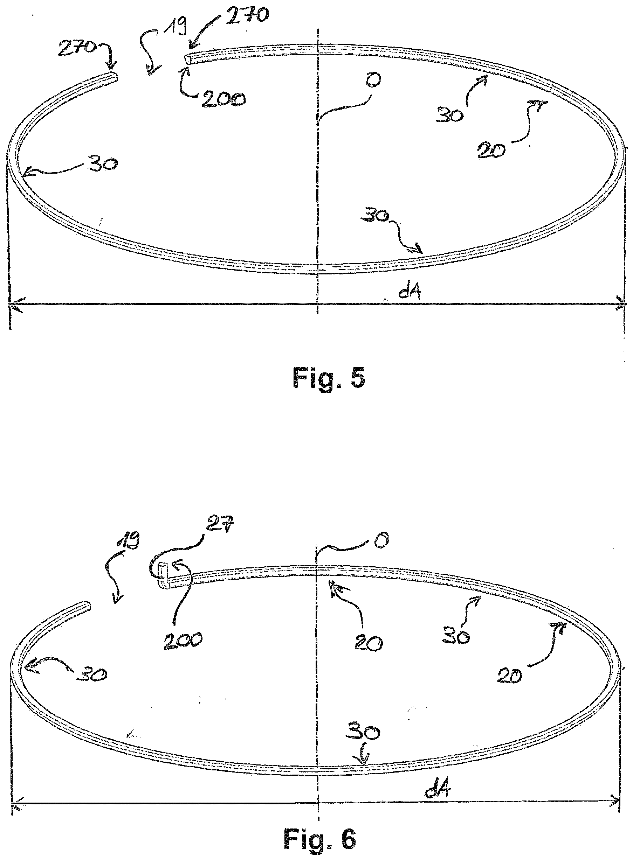

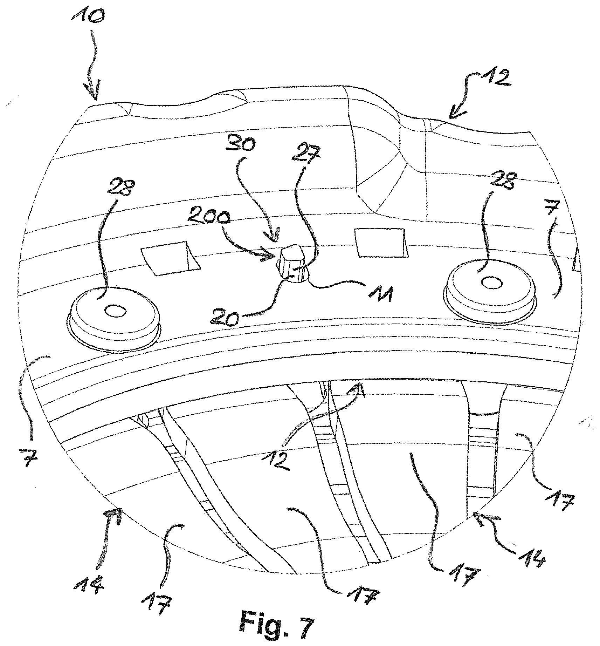

Les figures 6 et 7 illustrent un quatrième mode de réalisation de l'invention sensiblement similaire au premier mode de réalisation à l'exception du fait que l'anneau élastique 20 ouvert comporte sur l'une de ces extrémités 270 un brin 27 recourbé selon l'axe O de révolution. De préférence, la forme du brin 27 recourbé avec l'anneau élastique 20 définit par exemple une forme en « L » tel que représenté sur la figure 6.

Comme illustré sur un mécanisme d'embrayage 1 de la figure 7, ledit brin 27 passe au travers d'un orifice 11 ménagé dans le couvercle 12. Avantageusement, le brin 27 recourbé est en saillie axiale par rapport à la surface externe du couvercle 12. Plus particulièrement, cette surface externe du couvercle 12 est définit comme la surface externe de la plaque annulaire 7 du couvercle 12.

De préférence, la position angulaire de l'orifice 11 ménagé dans le couvercle 12 est située à égale distance de deux entretoises 28 consécutives.

Avantageusement, l'orifice 11 du couvercle par lequel passe le brin 27 recourbé est ménagé à proximité ou au niveau du cercle d'implantation c des entretoises 28. De préférence, l'orifice 11 est ménagé dans le couvercle 12 par perçage. De préférence, le brin 27 recourbé peut être réalisé par emboutissage, par pliage.

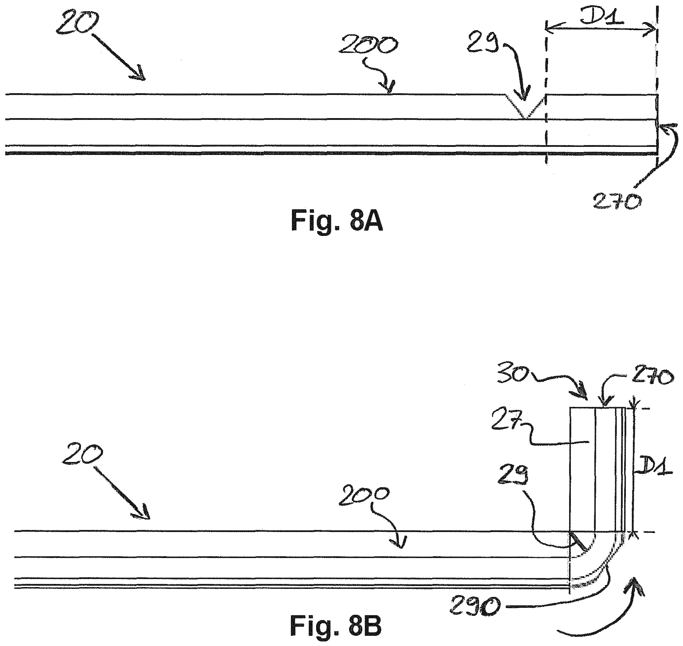

On va maintenant décrire la fabrication de l'anneau élastique 20 suivant le premier mode de mise en oeuvre de l'invention, comme illustré notamment sur les figures 8a à 8b. La fabrication comporte, entre autre, les étapes suivantes :
Selon une première étape, on fournit un anneau élastique 20 de type ouvert, l'ouverture étant délimitée entre ses deux extrémités 270.

Selon une deuxième étape, on découpe une entaille ou une encoche 29 depuis une première extrémité 270 de l'anneau élastique 20, à une distance minimale D1 de ladite première extrémité 270. De préférence, l'entaille ou l'encoche 29 est formée depuis la première face 21 de l'anneau élastique 20. Plus précisément, la découpe de l'entaille ou l'encoche 29 est une forme de type en V comme illustrée notamment à la figure 8a.

Selon une troisième étape, on plie ladite première extrémité entaillée de l'anneau élastique 20 jusqu'à son entaille 29, pour former le brin 27 recourbé, comme illustrée notamment à la figure 8b. Avantageusement, le brin 27 recourbé droit est par exemple à angle droit.

Selon ce procédé, l'entaille ou l'encoche 29 formée avant pliage de l'anneau élastique 20 permet d'obtenir un brin 27 recourbé droit par rapport au reste de l'anneau, autrement dit un brin 27 sans courbure de pliage, ceci afin de limiter la déformation de l'anneau élastique 20 sollicité notamment par le couvercle 12 lors du fonctionnement du mécanisme 1 d'embrayage.

Avantageusement, la distance minimale D1 de l'entaille par rapport à l'extrémité de l'anneau à recourber définit la hauteur minimale du brin 27 recourbé après pliage. La distance minimale D1 est adaptable et choisie suivant des valeurs de déformation de l'anneau, et/ou suivant l'épaisseur du couvercle 12 et/ou la hauteur de l'orifice 11 ménagé dans le couvercle.

Selon une étape supplémentaire, après l'étape de pliage, on rectifie le contour, autrement dit on rogne le congé de pliage du brin avec le reste de l'anneau, pour former un côté droit 290 afin de réduire encore la déformation de l'anneau.

En variante non illustrée, lesdites étapes précédentes de fabrication peuvent être également réalisées sur l'autre extrémité de l'anneau élastique, afin de former un deuxième brin recourbé.

Bien entendu, la présente invention n'est pas limitée aux modes de réalisation décrits et représentés, fournis à titre d'exemple illustratif et non limitatif.

## Revendications

1. Sous-ensemble (10) pour mécanisme d'embrayage (1), comprenant :
- un couvercle (12) pourvu d'un logement (13) circulaire d'axe (O) de révolution,
- un anneau élastique (20) ouvert inséré dans le logement (13) circulaire, l'anneau élastique (20) ouvert étant défini par deux états de fonctionnement : un état libre, dans lequel le diamètre extérieur (dA) de l'anneau (20) est supérieur au diamètre (dL) du logement (13), et un état contraint, dans lequel le diamètre extérieur (dA) de l'anneau (20) est inscrit dans le diamètre (dL) du logement (13),
**caractérisé en ce que** le logement (13) et l'anneau élastique (20) comprennent chacun des moyens de retenue additionnels (30) adaptés pour maintenir l'anneau élastique (20) dans son état contraint au sein du couvercle (12), et dans lequel le logement (13) du couvercle (12) comprend un fond (33) sur lequel l'anneau élastique (20) est en appui, et des moyens de retenue additionnels (30) comprenant :
- un bord radial (31) délimité par un diamètre (dB), et
- un congé (32) de raccordement reliant le fond (33) avec le bord radial (31).

2. Sous-ensemble (10) selon la revendication précédente, dans lequel le bord radial (31) du logement (13) présente une contre-dépouille adaptée à coopérer l'anneau élastique (20).

3. Sous-ensemble (10) selon la revendication précédente, dans lequel la contre-dépouille présente un angle α compris entre 45 degrés et 89 degrés mesuré entre le fond (33) du logement et le bord radial (31).

4. Sous-ensemble (10) selon l'une des revendications 1 à 3, dans lequel le diamètre (dL) du logement (13) est formé par le congé (32) de raccordement, le diamètre (dL) du logement (13) étant supérieur au diamètre (dB).

5. Sous-ensemble (10) selon l'une des revendications 1 à 4, dans lequel l'anneau élastique (20) présente en section selon un plan passant par l'axe de révolution une forme trapézoïdale (200), les moyens de retenue additionnels (30) dudit anneau élastique (20) étant réalisés par une des faces du trapèze.

6. Sous-ensemble (10) selon la revendication précédente, dans lequel la section de l'anneau élastique (20) comprend quatre faces, une première face (21) est en appui sur le fond (33) du couvercle (12) et une deuxième face (22) est en appui sur le bord radial (31) du couvercle (12), ladite deuxième face (22) étant tronconique.

7. Sous-ensemble (10) selon la revendication précédente, dans lequel une troisième face (23) de la section de l'anneau élastique (20) est en appui sur le diaphragme (14), ladite troisième face (23) étant bombée.

8. Sous-ensemble (10) selon l'une des revendications 1 à 7, dans lequel le diamètre extérieur (dA) de l'anneau élastique (20) dans son état contraint est supérieur au diamètre (dB) du bord radial (31).

9. Sous-ensemble (10) selon l'une des revendications 1 à 4, dans lequel l'anneau élastique (20) présente en section selon un plan passant par l'axe de révolution une forme elliptique (201), par exemple une forme circulaire, les moyens de retenue additionnels (30) dudit anneau élastique (20) étant réalisés par un des rayons de ladite forme (201).

10. Mécanisme d'embrayage (1) comprenant le sous-ensemble (10) selon l'une quelconque des revendications 1 à 9, un plateau de pression (16) mobile axialement par rapport au couvercle (12), un diaphragme (14) monté entre le couvercle (12) et le plateau de pression (16), ledit diaphragme (14) étant en appui sur l'anneau élastique (20).

11. Mécanisme d'embrayage (1) selon la revendication 10, dans lequel l'anneau élastique (20) comporte sur l'une de ces extrémités un brin (27) recourbé selon l'axe (O), ledit brin (27) passant au travers d'un orifice (11) ménagé dans le couvercle (12).

12. Mécanisme d'embrayage (1) selon la revendication précédente, dans lequel le brin (27) recourbé est en saillie axiale par rapport à la surface externe du couvercle (12).

13. Mécanisme d'embrayage (1) comprenant le sous-ensemble (10) selon l'une quelconque des revendications 1 à 9, dans lequel le mécanisme d'embrayage (1) est de type Tiré, le couvercle (12) comprend une plaque annulaire (7), une jupe externe (8) et une zone de raccordement (9) reliant la plaque annulaire (7) à la jupe externe (8), le logement (13) du couvercle (12) étant formé au niveau de la zone de raccordement (9).

14. Procédé d'assemblage d'un sous-ensemble (10) pour mécanisme d'embrayage (1), selon l'une quelconque des revendications 1 à 9 comportant au moins les étapes suivantes :
- fournir un couvercle (12) et un anneau élastique (20) dans son l'état libre,
- contraindre diamétralement l'anneau élastique (20) de sorte que le diamètre extérieur (dA) de l'anneau soit inférieur au diamètre dB du logement (13) du couvercle (12),
- appliquer l'anneau élastique (20) au fond du logement (13),
- relâcher la contrainte diamétrale sur l'anneau élastique (20) de sorte que l'anneau élastique (20) vienne en appui sur le bord radial (31) du logement (13) du couvercle (12), l'anneau (20) étant alors dans son état contraint.

## Patentansprüche

1. Untereinheit (10) für einen Kupplungsmechanismus (1), umfassend:
- einen Deckel (12), der mit einer kreisförmigen Aufnahme (13) mit der Rotationsachse (O) versehen ist,
- einen offenen elastischen Ring (20), der in die kreisförmige Aufnahme (13) eingelegt ist,
wobei der offene elastische Ring (20) durch zwei Betriebszustände definiert ist: einen freien Zustand, in dem der Außendurchmesser (dA) des Rings (20) größer als der Durchmesser (dL) der Aufnahme (13) ist, und einen gespannten Zustand, in dem der Außendurchmesser (dA) des Rings (20) in den Durchmesser (dL) der Aufnahme (13) einbeschrieben ist,
**dadurch gekennzeichnet, dass** die Aufnahme (13) und der elastische Ring (20) jeweils zusätzliche Rückhaltemittel (30) umfassen, die geeignet sind, den elastischen Ring (20) in seinem gespannten Zustand im Deckel (12) zu halten, und wobei die Aufnahme (13) des Deckels (12) einen Boden (33) umfasst, auf dem der elastische Ring (20) aufliegt, und zusätzliche Rückhaltemittel (30), umfassend:
- einen radialen Rand (31), der durch einen Durchmesser (dB) begrenzt wird, und
- eine Übergangshohlkehle (32), die den Boden (33) mit dem radialen Rand (31) verbindet.

2. Untereinheit (10) nach dem vorhergehenden Anspruch, wobei der radiale Rand (31) der Aufnahme (13) eine Hinterschneidung aufweist, die geeignet ist, mit dem elastischen Ring (20) zusammenzuwirken.

3. Untereinheit (10) nach dem vorhergehenden Anspruch, wobei die Hinterschneidung einen Winkel α zwischen 45 Grad und 89 Grad aufweist, gemessen zwischen dem Boden (33) der Aufnahme und dem radialen Rand (31).

4. Untereinheit (10) nach einem der Ansprüche 1 bis 3, wobei der Durchmesser (dL) der Aufnahme (13) durch die Übergangshohlkehle (32) gebildet wird, wobei der Durchmesser (dL) der Aufnahme (13) größer als der Durchmesser (dB) ist.

5. Untereinheit (10) nach einem der Ansprüche 1 bis 4, wobei der elastische Ring (20) im Querschnitt entlang einer durch die Rotationsachse verlaufenden Ebene eine Trapezform (200) aufweist, wobei die zusätzlichen Rückhaltemittel (30) des elastischen Rings (20) durch eine der Seiten des Trapezes ausgeführt sind.

6. Untereinheit (10) nach dem vorhergehenden Anspruch, wobei der Querschnitt des elastischen Rings (20) vier Seiten umfasst, eine erste Seite (21) am Boden (33) des Deckels (12) anliegt und eine zweite Seite (22) am radialen Rand (31) des Deckels (12) anliegt, wobei die zweite Seite (22) kegelstumpfförmig ist.

7. Untereinheit (10) nach dem vorhergehenden Anspruch, wobei eine dritte Seite (23) des Querschnitts des elastischen Rings (20) an der Membran (14) anliegt, wobei die dritte Seite (23) gewölbt ist.

8. Untereinheit (10) nach einem der Ansprüche 1 bis 7, wobei der Außendurchmesser (dA) des elastischen Rings (20) in dessen gespanntem Zustand größer als der Durchmesser (dB) des radialen Rands (31) ist.

9. Untereinheit (10) nach einem der Ansprüche 1 bis 4, wobei der elastische Ring (20) im Querschnitt entlang einer durch die Rotationsachse verlaufenden Ebene eine elliptische Form (201), beispielsweise eine kreisförmige Form, aufweist, wobei die zusätzlichen Rückhaltemittel (30) des elastischen Rings (20) durch einen der Radien der Form (201) ausgeführt sind.

10. Kupplungsmechanismus (1), umfassend die Untereinheit (10) nach einem der Ansprüche 1 bis 9, eine in Bezug auf den Deckel (12) axial bewegliche Anpressplatte (16), eine zwischen dem Deckel (12) und der Anpressplatte (16) montierte Membran (14), wobei die Membran (14) an dem elastischen Ring (20) anliegt.

11. Kupplungsmechanismus (1) nach Anspruch 10, wobei der elastische Ring (20) an einem seiner Enden einen entlang der Achse (O) umgebogenen Strang (27) beinhaltet, wobei der Strang (27) durch eine im Deckel (12) ausgebildete Öffnung (11) verläuft.

12. Kupplungsmechanismus (1) nach dem vorhergehenden Anspruch, wobei der umgebogene Strang (27) in Bezug auf die Außenfläche des Deckels (12) axial absteht.

13. Kupplungsmechanismus (1) mit der Untereinheit (10) nach einem der Ansprüche 1 bis 9, wobei der Kupplungsmechanismus (1) vom gezogenen Typ ist, der Deckel (12) eine Ringscheibe (7), eine äußere Einfassung (8) und einen Übergangsbereich (9), der die Ringscheibe (7) mit der äußeren Einfassung (8) verbindet, umfasst, wobei die Aufnahme (13) des Deckels (12) auf Höhe des Übergangsbereichs (9) geformt ist.

14. Verfahren zur Montage einer Untereinheit (10) für einen Kupplungsmechanismus (1) nach einem der Ansprüche 1 bis 9, das mindestens die folgenden Schritte beinhaltet:
- Bereitstellen eines Deckels (12) und eines elastischen Rings (20) in dessen freiem Zustand,
- diametrales Spannen des elastischen Rings (20), so dass der Außendurchmesser (dA) des Rings kleiner als der Durchmesser dB der Aufnahme (13) des Deckels (12) ist,
- Auflegen des elastischen Rings (20) auf den Boden des Deckels (13),
- Lösen der diametralen Spannung auf den elastischen Ring (20), so dass der elastische Ring (20) am radialen Rand (31) der Aufnahme (13) des Deckels (12) zur Anlage kommt, wobei der Ring (20) dann in seinem gespannten Zustand ist.

## Claims

1. Sub-assembly (10) for clutch mechanism (1), comprising:
- a cover (12) provided with a recess (13) that is circular with axis of revolution (O),
- an open elastic ring (20) inserted into the circular recess (13), the open elastic ring (20) being defined by two operating states: a free state in which the outer diameter (dA) of the ring (20) is greater than the diameter (dL) of the recess (13), and a constrained state in which the outer diameter (dA) of the ring (20) falls within the diameter (dL) of the recess (13),
**characterized in that** the recess (13) and the elastic ring (20) each comprise additional retention means (30) that are designed to hold the elastic ring (20) in its constrained state within the cover (12), and wherein the recess (13) of the cover (12) comprises a base (33) against which the elastic ring (20) presses, and additional retention means (30) comprising:
- a radial edge (31) delimited by a diameter (dB), and
- a connecting fillet (32) that connects the base (33) to the radial edge (31).

2. Sub-assembly (10) according to the preceding claim, wherein the radial edge (31) of the recess (13) has an undercut that is suitable for cooperating with the elastic ring (20).

3. Sub-assembly (10) according to the preceding claim, wherein the undercut has an angle α of between 45 degrees and 89 degrees, measured between the base (33) of the recess and the radial edge (31).

4. Sub-assembly (10) according to one of Claims 1 to 3, wherein the diameter (dL) of the recess (13) is formed by the connecting fillet (32), the diameter (dL) of the recess (13) being greater than the diameter (dB).

5. Sub-assembly (10) according to one of Claims 1 to 4, wherein the elastic ring (20) has, in section in a plane passing through the axis of revolution, a trapezoidal shape (200), the additional retention means (30) of said elastic ring (20) consisting of one of the faces of the trapezium.

6. Sub-assembly (10) according to the preceding claim, wherein the cross section of the elastic ring (20) has four faces, a first face (21) presses against the base (33) of the cover (12) and a second face (22) presses against the radial edge (31) of the cover (12), said second face (22) being frustoconical.

7. Sub-assembly (10) according to the preceding claim, wherein a third face (23) of the cross section of the elastic ring (20) presses against the diaphragm (14), said third face (23) being convex.

8. Sub-assembly (10) according to one of Claims 1 to 7, wherein the outer diameter (dA) of the elastic ring (20) in its constrained state is greater than the diameter (dB) of the radial edge (31).

9. Sub-assembly (10) according to one of Claims 1 to 4, wherein the elastic ring (20) has, in section in a plane passing through the axis of revolution, an elliptical shape (201), for example a circular shape, the additional means (30) for retention of said elastic ring (20) consisting of one of the radii of said shape (201).

10. Clutch mechanism (1) comprising the sub-assembly (10) according to any one of Claims 1 to 9, a pressure plate (16) that is able to move axially relative to the cover (12), a diaphragm (14) mounted between the cover (12) and the pressure plate (16), with said diaphragm (14) pressing against the elastic ring (20) .

11. Clutch mechanism (1) according to Claim 10, wherein the elastic ring (20) comprises, on one of these ends, a length (27) that is bent back along the axis (O), said length (27) passing through an orifice (11) created in the cover (12).

12. Clutch mechanism (1) according to the preceding claim, wherein the bent-back length (27) projects axially relative to the outer surface of the cover (12) .

13. Clutch mechanism (1) comprising the sub-assembly (10) according to any one of Claims 1 to 9, wherein the clutch mechanism (1) is of the push type, the cover (12) comprises an annular plate (7), an outer skirt (8) and a connection zone (9) connecting the annular plate (7) to the outer skirt (8), the recess (13) of the cover (12) being formed at the connection zone (9) .

14. Method for assembling a sub-assembly (10) for a clutch mechanism (1), according to any one of Claims 1 to 9, comprising at least the following steps:
- providing a cover (12) and an elastic ring (20) in its free state,
- constraining the elastic ring (20) in terms of its diameter in such a way that the outer diameter (dA) of the ring is smaller than the diameter (dB) of the recess (13) of the cover (12),
- pressing the elastic ring (20) against the base of the recess (13),
- releasing the diameter constraint on the elastic ring (20) such that the elastic ring (20) comes to press against the radial edge (31) of the recess (13) of the cover (12), the ring (20) then being in its constrained state.
